(19) Europäisches Patentamt
European Patent Office
Office européen des brevets

(11) **EP 4 568 087 A1**

(12) **EUROPEAN PATENT APPLICATION**

(43) Date of publication:
**11.06.2025 Bulletin 2025/24**

(21) Application number: **24215883.0**

(22) Date of filing: **27.11.2024**

(51) International Patent Classification (IPC):
*H02M 1/00* (2006.01)    *H02M 3/335* (2006.01)
*H02M 7/483* (2007.01)    *B60L 53/20* (2019.01)
*B60L 55/00* (2019.01)    *H02J 7/02* (2016.01)
*H02M 7/487* (2007.01)    *H02M 3/00* (2006.01)

(52) Cooperative Patent Classification (CPC):
**H02M 3/01; B60L 53/20; B60L 55/00; H02J 7/02;
H02M 1/0095; H02M 3/33573; H02M 3/33584;
H02M 7/4833; H02M 7/4837; H02M 7/487**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.12.2023 JP 2023206350**

(71) Applicant: **MAZDA MOTOR CORPORATION**
**Hiroshima 730-8670 (JP)**

(72) Inventor: **Lung, Chienru**
**Chiba-shi, Chiba (JP)**

(74) Representative: **Laufhütte, Dieter**
**Lorenz Seidler Gossel
Rechtsanwälte Patentanwälte
Partnerschaft mbB
Widenmayerstraße 23
80538 München (DE)**

(54) **POWER CONVERTER**

(57) A power converter including a converter mechanism having a bidirectional isolated LLC resonant circuit and a controller which controls the converter mechanism is provided. The bidirectional isolated LLC resonant circuit includes a transformer having primary and secondary coils, a primary circuit having a primary input/output terminal pair and six primary switching elements, a secondary circuit having a secondary input/output terminal pair and four secondary switching elements, and an LLC circuit disposed between the transformer and the primary circuit. The bidirectional isolated LLC resonant circuit performs a charging operation and a discharging operation. The controller has switching control information related to a duty ratio and a phase shift that are set according to a magnitude relationship of inputted/outputted direct current (DC) voltages, and changes a switching pattern of each of the primary and secondary switching elements in the charging operation and the discharging operation based on the switching control information.

FIG. 2

**EP 4 568 087 A1**

**Description**

The present disclosure relates to a power converter (DC/DC converter), which receives DC voltage, converts it to DC voltage of a different magnitude, and outputs it.

In recent years, electrification of automobiles, such as electric vehicles and hybrid vehicles, has become significantly active. These vehicles that run on electric power are equipped with high-output batteries as their power source. To charge the batteries, these vehicles are also equipped with charging systems (On Board Chargers: OBCs) that convert commercial alternating current (AC) power into direct current (DC) power.

Many OBCs use an AC/DC converter that converts AC voltage to DC voltage, and a DC/DC converter that converts the DC voltage outputted from the AC/DC converter into a different voltage. The voltage magnitude is mainly converted by the DC/DC converter.

From the point of improving efficiency, resonant DC/DC converters are often used in such DC/DC converters. However, resonant DC/DC converters have a disadvantage in that the voltage operating range is narrow due to the constraints of zero voltage switching (ZVS).

Commercial power sources generally use AC voltages of 100 V to 200 V In contrast, batteries mounted on vehicles use DC voltages ranging from 48 V to high voltages of over 400 V Therefore, it is preferable for DC/DC converters to be able to handle conversion in such a wide range of power, and there is a demand for an expansion of a supported range of power conversion.

Regarding the present disclosure, a technology for expanding the power output range in a resonant DC/DC converter has been proposed (JP2021-035328A).

Here, an isolated DC/DC converter provided with a specified LLC resonant converter circuit is disclosed. As used herein, "LLC" refers to an arrangement with two inductors (L) and one capacitor (C). ON/OFF operations of switching elements disposed on the input side of the LLC resonant converter circuit are switched using different modulation methods. Thus, the magnitude of the voltage outputted to the LLC resonant circuit side is changed.

The technology of JP2021-035328A is based on the specific LLC resonant converter circuit, and a similar basic operation to the asymmetric half-bridge method is used for the control. Therefore, since only half of the input voltage can be used, in practice, it is not suitable for large power applications.

Furthermore, because the control is performed with a duty ratio at a fixed value (25%, 50%, 75%, etc.), in practice, the control range of the output voltage is unavoidably narrow. Moreover, this technology is intended for a charging operation and does not support a discharging operation.

Therefore, the present disclosure discloses a technology which effectively expands a supported power conversion range of a DC/DC converter toward both charging and discharging sides.

The disclosed technology relates to a power converter which receives DC voltage and converts it to DC voltage of a different magnitude, which includes a converter mechanism having a bidirectional isolated LLC resonant circuit and a controller which controls the converter mechanism.

The bidirectional isolated LLC resonant circuit includes a transformer having a primary coil and a secondary coil, a primary circuit disposed on a primary side of the transformer and having a primary input/output terminal pair and six primary switching elements, a secondary circuit disposed on a secondary side of the transformer and having a secondary input/output terminal pair and four secondary switching elements, and an LLC circuit disposed between the transformer and the primary circuit.

The bidirectional isolated LLC resonant circuit performs a charging operation in which DC voltage is inputted to the primary input/output terminal pair and outputted from the secondary input/output terminal pair and a discharging operation in which the DC voltage is inputted to the secondary input/output terminal pair and outputted from the primary input/output terminal pair.

The controller has switching control information related to a duty ratio and a phase shift that are set according to a magnitude relationship of the inputted/outputted DC voltages, and changes a switching pattern of each of the primary and secondary switching elements in the charging operation and the discharging operation based on the switching control information.

In other words, this power converter is a so-called DC/DC converter, which includes the given bidirectional insulated LLC resonant circuit and is configured to perform the charging operation and the discharging operation. Further, the controller has the switching control information related to the duty ratio and the phase shift that are set according to the magnitude relationship of the inputted/outputted DC voltages, and changes the switching pattern of each of the primary and secondary switching elements in the charging operation and the discharging operation based on the switching control information.

According to this power converter, since the charging operation and the discharging operation can be controlled by combining the duty ratio and the phase shift according to the magnitude relationship of the inputted/outputted DC voltages, a highly efficient and accurate control can be realized by a simple method, and the applicable power conversion range can be effectively expanded toward both the charging side and the discharging side.

The primary circuit may further have an intermediate voltage output part at which primary half voltage is applied to the LLC circuit, the primary half voltage being an intermediate voltage of the primary voltage that is the DC voltage inputted to the primary input/output terminal pair. In a case where the DC voltage outputted in the charging operation is larger than the primary half voltage, the controller may switch the voltage that is applied to the LLC circuit between the primary voltage and the primary half voltage, while controlling the duty ratio.

Thus, positive and negative waveforms of the voltage applied to the transformer on the primary side can be made uniform, and thus, a phenomenon of DC bias magnetization can be suppressed during the charging operation.

For example, the bidirectional insulated LLC resonant circuit may be configured as follows. The primary circuit may have a first leg provided with two of the primary switching elements that are arranged in series, a second leg provided with two element pairs arranged in series, each of the two element pairs constituted by the two of the primary switching elements arranged in series, a third leg provided with two primary capacitors arranged in series, a fourth leg provided with one intermediate capacitor, a fifth leg provided with two diodes arranged in series, a pair of primary main lines provided in one end with the primary input/output terminal pair, and connected to each other by the first, second, and third legs that are arranged in parallel to each other, a pair of bypass lines connected to the second leg between each of the element pairs to be in parallel to each other, the pair of bypass lines connected to each other by the fourth and fifth legs, the fourth and fifth legs arranged in parallel to each other, and a coupling line connected to a position of the fifth leg between the two diodes and a position of the third leg between the two primary capacitors.

The secondary circuit may have a sixth leg and a seventh leg, each provided with two of the secondary switching elements that are arranged in series, an eighth leg provided with one secondary capacitor, and a pair of secondary main lines provided in one end with the secondary input/output terminal pair, and connected to each other by the sixth, seventh, and eighth legs that are arranged in parallel to each other.

The power converter may further include a primary upper relay wiring connecting an end part of the primary coil on a positive polarity side to a position of the second leg between the two element pairs, a primary lower relay wiring connecting an end part of the primary coil on a negative polarity side to a position of the first leg between the two primary switching elements, a secondary upper relay wiring connecting an end part of the secondary coil on a positive polarity side to a position of the sixth leg between the two secondary switching elements, and a secondary lower relay wiring connecting an end part of the secondary coil on a negative polarity side to a position of the seventh leg between the two secondary switching elements. The LLC circuit may have a primary resonant capacitor and a primary resonant inductor arranged in series in the primary upper relay wiring.

Thus, the applicable power conversion range can be effectively expanded toward both the charging side and the discharging side with a relatively simple circuit configuration.

The bidirectional isolated LLC resonant circuit may further include a secondary LLC circuit located between the transformer and the secondary circuit.

Thus, the applicable power conversion range can be expanded more effectively to both the charging side and the discharging side.

The bidirectional insulated LLC resonant circuit may also be configured as follows. The primary circuit may have a first leg and a second leg, each provided with two of the primary switching elements arranged in series, a third leg provided with two primary capacitors arranged in series, a pair of primary main lines provided in one end with the primary input/output terminal pair, and connected to each other by the first, second, and third legs that are arranged in parallel to each other, and a coupling line provided with two of the primary switching elements arranged in series so that current flows towards each other, and connected to a position of the second leg between the two of the primary switching elements and a position of the third leg between the two primary capacitors.

The secondary circuit may have a sixth leg and a seventh leg, each provided with two of the secondary switching elements that are arranged in series, an eighth leg provided with one secondary capacitor, and a pair of secondary main lines provided in one end with the secondary input/output terminal pair, and connected to each other by the sixth, seventh, and eighth legs that are arranged in parallel to each other.

The power converter may further include a primary upper relay wiring connecting an end part of the primary coil on a positive polarity side to a position of the second leg between the two primary switching elements, a primary lower relay wiring connecting an end part of the primary coil on a negative polarity side to a position of the first leg between the two primary switching elements, a secondary upper relay wiring connecting an end part of the secondary coil on a positive polarity side to a position of the sixth leg between the two secondary switching elements, and a secondary lower relay wiring connecting an end part of the secondary coil on a negative polarity side to a position of the seventh leg between the two secondary switching elements. The LLC circuit may have a primary resonant capacitor and a primary resonant inductor arranged in series in the primary upper relay wiring.

Similarly to the bidirectional insulated LLC resonant circuit described above, this circuit configuration also enables effective expansion of the applicable power conversion range toward both the charging side and the discharging side with a relatively simple circuit configuration.

Also in the case with this bidirectional insulated LLC resonant circuit, the bidirectional isolated LLC resonant circuit may further include a secondary LLC circuit located between the transformer and the secondary circuit.

Thus, similarly to the bidirectional insulated LLC resonant circuit described above, this circuit configuration also enables more effective expansion of the applicable power conversion range toward both the charging side and the discharging side.

BRIEF DESCRIPTION OF DRAWINGS

Fig. 1 is a schematic diagram illustrating an application example of one embodiment of the disclosed technology.

Fig. 2 is a diagram illustrating a bidirectional isolated LLC resonant circuit.

Fig. 3 is a control block diagram of a controller during a charging operation.

Figs. 4A and 4B illustrate tables summarizing switching control information.

Fig. 5 illustrates a resonance curve of an LLC circuit.

Fig. 6 illustrates an example of various waveforms and switching patterns during a charging operation.

Fig. 7 illustrates an example of switching patterns in a first charging voltage range.

Figs. 8A and 8B are image diagrams of a current path of a bidirectional isolated LLC resonant circuit corresponding to Fig. 7.

Figs. 9A and 9B illustrate an example of an equivalent circuit and switching patterns of the bidirectional isolated LLC resonant circuit in a third charging voltage range.

Fig. 10 illustrates an example of image diagrams of the equivalent circuit and its current path of the bidirectional isolated LLC resonant circuit in a fourth charging voltage range.

Fig. 11 illustrates an example of switching patterns in a second discharging voltage range.

Figs. 12A and 12B are image diagrams of a current path of a bidirectional isolated LLC resonant circuit corresponding to Fig. 11.

Fig. 13 illustrates an example of an effect verification result by a simulation.

Figs. 14A and 14B illustrate examples of effect verification results by a simulation.

Fig. 15 illustrates a modification of the bidirectional isolated LLC resonant circuit.

Fig. 16 illustrates another embodiment of the bidirectional isolated LLC resonant circuit.

DETAILED DESCRIPTION OF THE DISCLOSURE

Hereinafter, some embodiments of the present disclosure are described with reference to the accompanying drawings. Note that the following description is essentially merely illustrative. Components of circuits are given specific marks along with alphanumeric symbols. For the sake of convenience, the symbols may be used in the description or illustration.

<Outline of Power Converter>

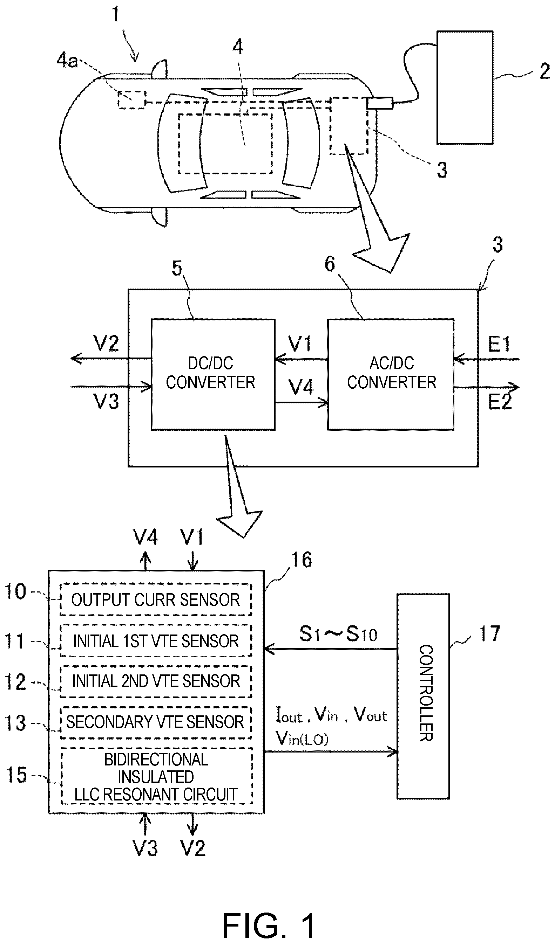

Fig. 1 illustrates an application example in which a power converter according to one embodiment is applied to an on-board charging system (OBC) 3. The charging system 3 is mounted on a vehicle 1 which travels using electric power, such as an electric vehicle or a hybrid vehicle, together with a high-output battery 4 for driving and a low-output lead storage battery 4a for electrical equipment.

**EP 4 568 087 A1**

The top part of Fig. 1 illustrates the vehicle 1 and a commercial power source 2 during charging. The commercial power source 2 outputs high AC voltages such as 100V and 200V The battery 4 is charged by connecting the commercial power source 2 to the vehicle 1 by a cable. Here, the charging system 3 interposes between the battery 4 and the commercial power source 2, and converts the alternating current (AC) voltage into direct current (DC) voltage compatible with the battery 4.

As illustrated in the middle part of Fig. 1, the charging system 3 is comprised of a DC/DC converter 5, an AC/DC converter 6, etc. The AC/DC converter 6 converts AC input voltage E1 into DC output voltage V1, and converts DC input voltage V4 into AC output voltage E2.

The DC/DC converter 5 converts DC voltage into another DC voltage of a different magnitude and outputs it. That is, the DC/DC converter 5 is an example of a "power converter" and the present disclosure is applied to this DC/DC converter 5.

The DC/DC converter 5 converts the DC voltage V1 converted by the AC/DC converter 6 into given DC voltage V2 and outputs it to one of the battery 4 and a lead storage battery 4a (charging operation described later). The DC/DC converter 5 also converts DC voltage V3 which is inputted from the one of the battery 4 side and the lead storage battery 4a side into the given DC voltage V4 and outputs it to the AC/DC converter 6 (discharging operation described later).

Since this DC/DC converter 5 is incorporated into the charging system 3, as described later, it is configured such that its structure and functions are superior for those of the charging operation to the discharging operation. Therefore, the structure and functions of the DC/DC converter 5 are explained mainly with reference to the charging operation.

As illustrated in the lower part of Fig. 1, the DC/DC converter 5 includes a converter mechanism 16 having output current sensors 10, a primary input voltage sensor 11, a primary second output voltage sensor 12, a secondary voltage sensor 13, and a bidirectional insulated LLC resonant circuit 15, and a controller 17 which controls the converter mechanism 16.

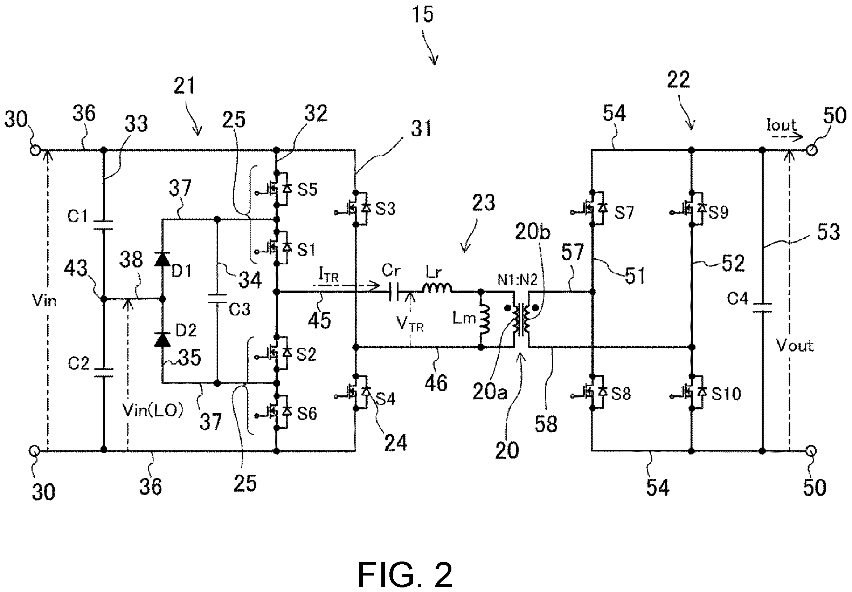

The output current sensors 10 are Hall element type sensor and, as described later, are installed at given positions of primary main lines 36 and secondary main lines 54. As illustrated in Fig. 2, the output current sensors 10 directly measure the current (output current $I_{out}$) flowing through a primary input/output terminal 30 and a secondary input/output terminal 50, and output them to the controller 17.

The primary first voltage sensor 11 is installed at a given position of the primary main line 36, directly measures high voltage (primary voltage $V_{in}$) acting between the pair of primary main lines 36, and outputs it to the controller 17. The primary second voltage sensor 12 is installed at a given position between one of the primary main lines 36 on the negative polarity side, and a coupling line 38, directly measures low intermediate voltage (primary half voltage $V_{in(LO)}$) acting between the primary main line 36 and the coupling line 38, and outputs it to the controller 17.

The secondary voltage (secondary voltage $V_{out}$) sensor 13 is installed at a given position of the secondary main lines 54, directly measures high voltage (secondary voltage $V_{out}$) acting between the pair of secondary main lines 54, and outputs it to the controller 17.

Based on these measurement values, the controller 17 performs an ON/OFF control by outputting drive voltage to ten (10) switching elements S1-S10 (first to tenth switching elements S1 -S10) of the bidirectional insulated LLC resonant circuit 15. That is, the controller 17 switches the switching elements S1-S10 between a conducting state (ON) and a non-conducting state (OFF) at a given timing.

(Bidirectional Isolated LLC Resonant Circuit)

Fig. 2 illustrates the bidirectional isolated LLC resonant circuit 15 (hereinafter, also referred to as the "converter circuit 15"). The converter circuit 15 generally includes a transformer 20, a primary circuit 21 located on a primary side of the transformer 20, a secondary circuit 22 located on a secondary side of the primary circuit 21, and an LLC circuit 23 located between the transformer 20 and the primary circuit 21.

The primary circuit 21 has a pair of primary input/output terminals 30 (primary input/output terminal pair) and six primary switching elements S1-S6. The secondary circuit 22 has a pair of secondary input/output terminals 50 (secondary input/output terminal pair) and four secondary switching elements S7-S10. The converter circuit 15 having the above configuration allows the DC/DC converter 5 to perform a charging operation in which DC voltage is inputted to the primary input/output terminals 30 and outputted from the secondary input/output terminals 50, and a discharging operation in which DC voltage is inputted to the secondary input/output terminals 50 and outputted from the primary input/output terminals 30.

The primary switching elements S1-S6 and the secondary switching elements S7-S10 are comprised of, for example, known MOSFETs, each having gate, source, and drain terminals. They are turned ON by receiving given drive voltage to the gate terminal. The primary switching elements S1-S6 and the secondary switching elements S7-S10 are all arranged so that the current flows from the positive polarity side to the negative polarity side in the ON state. The primary switching elements S1-S6 and the secondary switching elements S7-S10 include a flyback diode 24 connected in inverse parallel to the electrical load.

5

The transformer 20 has a primary coil 20a and a secondary coil 20b. "N1" is the number of turns of the primary coil 20a, and "N2" is the number of turns of the secondary coil 20b. "N1:N2" represents a turns ratio. In the case of the converter circuit 15 in this embodiment, N1:N2 is 1:1. Note that the turns ratio can be changed according to the specifications of an operating range of the input and output voltages.

The primary circuit 21 has a first leg 31, a second leg 32, a third leg 33, a fourth leg 34, a fifth leg 35, the pair of primary main lines 36, a pair of bypass lines 37, and the coupling line 38.

The first leg 31 has two primary switching elements S3 and S4 arranged in series. The second leg 32 has four primary switching elements S5, S1, S2 and S6 connected in series. For the sake of explanation, these are also assumed to be two pairs of elements 25, each pair consisting of two primary switching elements (pair of S5 and S1, and pair of S2 and S6) connected in series.

The third leg 33 is provided with two primary capacitors C1 and C2 arranged in series. These primary capacitors C1 and C2 have the same capacitance. The fourth leg 34 is provided with a single intermediate capacitor C3. The fifth leg 35 is provided with two diodes D1 and D2 arranged in series. These diodes D1 and D2 are arranged so that the current flows from the negative polarity side to the positive polarity side.

The first leg 31, the second leg 32, and the third leg 33 are connected in parallel between the pair of primary main lines 36. The primary input/output terminal 30 is arranged at one end of each of these primary main lines 36. The third leg 33, the second leg 32, and the first leg 31 are arranged in this order from the primary input/output terminal 30 side.

The pair of bypass lines 37 is connected in parallel to each other to the second leg 32 between the primary switching elements (pair of S5 and S1, and pair of S2 and S6) consisting of each of the element pairs 25. The fourth leg 34 and the fifth leg 35 are connected in parallel to each other between these bypass lines 37. The coupling line 38 is connected to a position of the fifth leg 35 between the two diodes D1 and D2 and a position of the third leg 33 between the two primary capacitors C1 and C2 (intermediate voltage output part 43).

An end part of the primary coil 20a on the positive polarity side and a position of the second leg 32 between the two element pairs 25 are connected to each other by a primary upper relay wiring 45. Further, an end part of the primary coil 20a on the negative polarity side and a position of the first leg 31 between the two primary switching elements S3 and S4 are connected to each other by a primary lower relay wiring 46.

A primary resonant capacitor Cr and a primary resonant inductor Lr (leakage inductance) are arranged in series in this order from the second leg 32 side in the primary upper relay wiring 45. A magnetizing inductor Lm is connected to the primary upper relay wiring 45 in parallel to the primary coil 20a.

The magnetizing inductor Lm may be an inductor generated by a main magnetic flux of the transformer 20. The LLC circuit 23 includes the primary resonant inductor Lr, the magnetizing inductor Lm, and the primary resonant capacitor Cr. Note that the primary resonant inductor Lr may also be a parasitic element of the transformer 20.

The secondary circuit 22 has a sixth leg 51, a seventh leg 52, an eighth leg 53, and the pair of secondary main lines 54.

The sixth leg 51 is provided with two secondary switching elements S7 and S8 arranged in series, and the seventh leg 52 is provided with two secondary switching elements S9 and S10 arranged in series. The eighth leg 53 is provided with a single secondary capacitor C4. The sixth leg 51, the seventh leg 52, and the eighth leg 53 are connected in parallel to each other between the pair of secondary main lines 54. The secondary input/output terminal 50 is disposed in one end of each of the secondary main lines 54. The eighth leg 53, the seventh leg 52, and the sixth leg 51 are disposed in this order from the secondary input/output terminal 50 side.

An end part of the secondary coil 20b on the positive polarity side and a position of the sixth leg 51 between the two secondary switching elements S7 and S8 are connected to each other by a secondary upper relay wiring 57. Further, an end part of the secondary coil 20b on the negative polarity side and a position of the seventh leg 52 between the two secondary switching elements S9 and S10 are connected to each other by a secondary lower relay wiring 58.

During the charging operation, the primary voltage $V_{in}$ is applied to the pair of primary main lines 36. Therefore, the primary voltage $V_{in}$ is also applied to each of the first leg 31, the second leg 32, and the third leg 33.

During the charging operation, voltage (transformer voltage $V_{TR}$) acts between the primary upper relay wiring 45 and the primary lower relay wiring 46, and current (transformer current $I_{TR}$) flows through the primary upper relay wiring 45. As a result, secondary voltage $V_{out}$ is applied to the pair of secondary main lines 54, and current (output current $I_{out}$) flows through the secondary input/output terminal 50.

(Control during Charging Operation by Controller)

Next, a control during the charging operation by the controller 17 is explained (a control during the discharging operation will be described later).

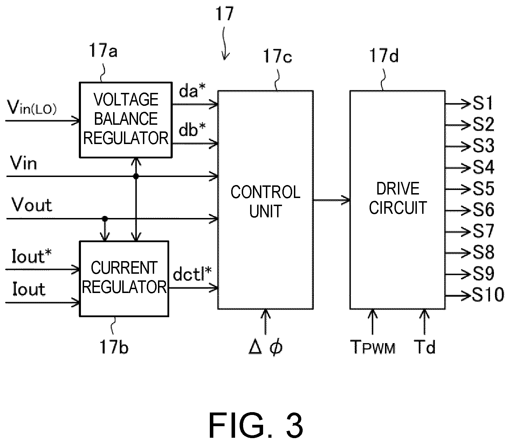

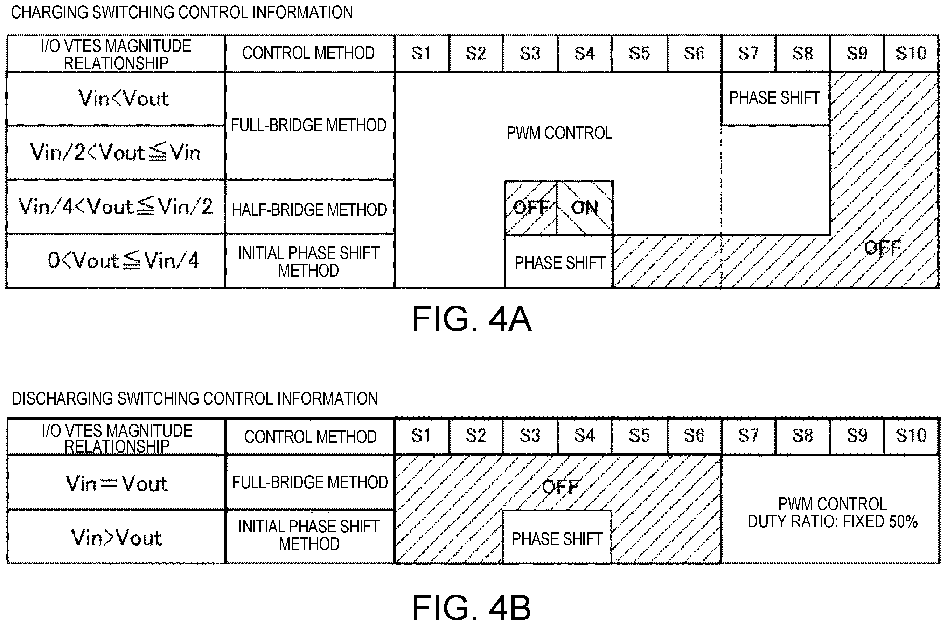

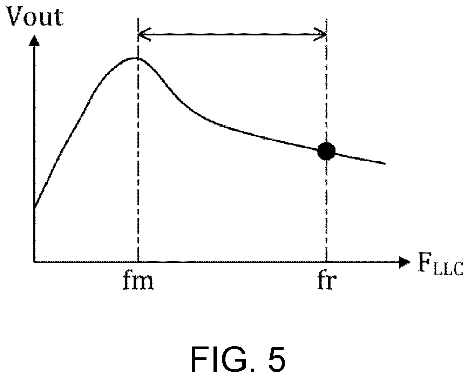

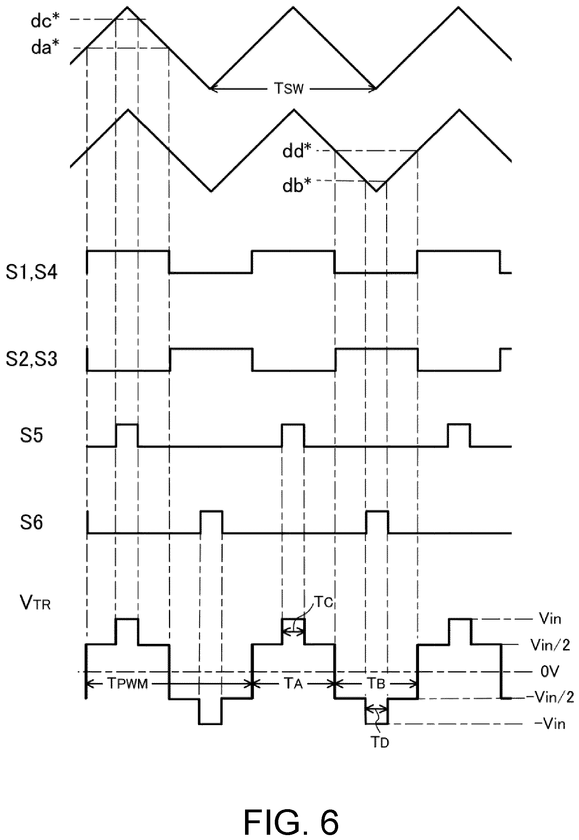

Fig. 3 illustrates a control block diagram of the controller 17 during the charging operation. Fig. 4 illustrates tables summarizing switching control information held by the controller 17. Fig. 5 illustrates a resonance curve of the LLC circuit 23. Fig. 6 illustrates an example of various waveforms and switching patterns (switching time chart) during the charging operation.

As indicated by an arrow in Fig. 5, the LLC circuit 23 generally adjusts the output voltage within an operating frequency range between a lower limit value fm and an upper limit value fr of resonant frequency. Therefore, the operating frequency of the LLC circuit 23 of the DC/DC converter 5 can also be set within this range. Note that it is preferable to fix the operating frequency of the LLC circuit 23 to one of the upper limit value fr of the resonant frequency and a value therearound, as indicated by the circle in Fig. 5. This allows the magnetizing inductor Lm to be small, and thus the transformer 20 can be made smaller in size.

As a result, the controller 17 controls the output current $I_{out}$ according to the required output voltage while the operating frequency of the LLC circuit 23 is fixed to the upper limit value fr of the resonant frequency or the value therearound. The lower limit value fm and the upper limit value fr of the resonant frequency are determined by the performance of the primary resonant capacitor Cr, the primary resonant inductor Lr, and the magnetizing inductor Lm that constitute the LLC circuit 23.

Although not illustrated, the controller 17 includes hardware, such as a processor and memory, and software, such as a control program and data, implemented in the memory. Through the cooperation of these components, as illustrated in Fig. 3, the controller 17 includes a voltage balance regulator 17a, a current regulator 17b, a control unit 17c, and a drive circuit 17d.

The voltage balance regulator 17a outputs a first parameter $d_a{}^*$ and a second parameter $d_b{}^*$ used for setting a duty ratio in a pulse width modulation (PWM) control to the control unit 17c, based on the primary voltage $V_{in}$ inputted from the primary first voltage sensor 11 and the primary half voltage $V_{in(LO)}$ inputted from the primary second voltage sensor 12.

The current regulator 17b outputs a reference parameter $d_{ctl}{}^*$ (corresponding to a duty ratio command value) used for setting the duty ratio in the PWM control to the control unit 17c, based on the primary voltage $V_{in}$, the secondary voltage $V_{out}$ inputted from the secondary voltage sensor 13, the output current $I_{out}$ inputted from the output current sensor 10, and the command value (output current command value) of the output current $I_{out}$.

The control unit 17c receives the first parameter $d_a{}^*$, the second parameter $d_b{}^*$, and the reference parameter $d_{ctl}{}^*$ as well as the primary voltage $V_{in}$, the secondary voltage $V_{out}$, and a phase angle $\Delta\varphi$ used for phase shifting. The control unit 17c carries given switching control information related to the switching of the converter circuit 15.

Figs. 4A and 4B illustrate tables summarizing the switching control information. Fig. 4A illustrates a table summarizing the switching control information during the charging operation, and Fig. 4B illustrates a table summarizing the switching control information during the discharging operation. The switching control information is set according to a magnitude relationship of the DC voltages inputted and outputted to the converter circuit 15, and includes information on the PWM control and the phase shift.

During the charging operation, the operating range is divided into four (first to fourth) charging voltage ranges, according to the magnitude relationship between the primary voltage $V_{in}$ (input voltage) and the secondary voltage $V_{out}$ (output voltage) of the converter circuit 15, and the switching control information is set for each of these ranges (first to fourth charging switching control information). According to the first to fourth charging switching control information, the ninth and tenth switching elements S9 and S10 of the secondary circuit 22 are constantly OFF in all the charging voltage ranges.

During the discharging operation, the operating range is divided into two (first and second) discharging voltage ranges, according to the magnitude relationship between the secondary voltage $V_{out}$ (input voltage) and the primary voltage $V_{in}$ (output voltage) of the converter circuit 15, and the switching control information is set for each of these ranges (first and second discharging switching control information). According to the first and second discharging switching control information, the first, second, fifth, and sixth switching elements S1, S2, S5, and S6 of the primary circuit 21 are constantly OFF in all the discharging voltage ranges.

The first charging voltage range corresponds to a case where the secondary voltage $V_{out}$ exceeds the primary voltage $V_{in}$. According to the first charging switching control information, in the first charging voltage range, a full-bridge method is used as the control method, and the PWM control is performed in switching each of the switching elements S1-S8.

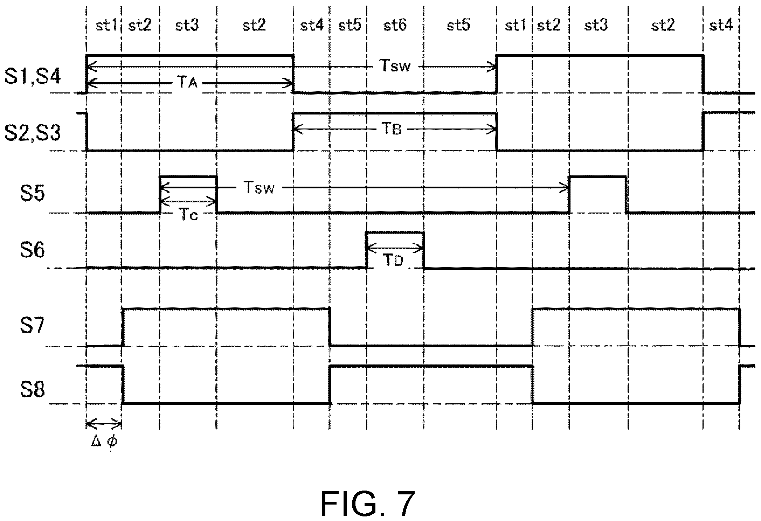

Among the switching elements S1-S8, the phase shift is performed in the seventh and eighth switching elements S7 and S8 of the secondary circuit 22. Specifically, processing in which the switching patterns of the seventh and eighth switching elements S7 and S8 are shifted by the phase angle $\Delta\varphi$ is performed (see Fig. 7). Thus, it is possible to perform ZVS (Zero Voltage Switching) even at high voltages.

The second charging voltage range corresponds to a case where the secondary voltage $V_{out}$ is the primary voltage $V_{in}$ or lower and exceeds 1/2 of the primary voltage $V_{in}$. According to the second charging switching control information, in the second charging voltage range, the full-bridge method is used as the control method and the PWM control is performed in switching each of the switching elements S1-S8, similarly to the first charging switching control information. Since the output voltage is not high, it is possible to perform the ZVS. Therefore, unlike the first charging switching control information, the phase shift is not performed in the secondary circuit 22.

The third charging voltage range corresponds to a case where the secondary voltage $V_{out}$ is 1/2 of the primary

voltage $V_{in}$ or lower and exceeds 1/4 of the primary voltage $V_{in}$. According to the third charging switching control information, in the third charging voltage range, by constantly keeping the third switching element S3 of the primary circuit 21 OFF and the fourth switching element S4 ON, a half-bridge method is used as the control method, and the PWM control is performed in the rest of the switching elements S1, S2, and S5-S8.

The fourth charging voltage range corresponds to a case where the secondary voltage $V_{out}$ is 1/4 of the primary voltage $V_{in}$ or lower. According to the fourth charging switching control information, in the fourth charging voltage range, a primary phase shift method is used as the control method. That is, the fifth and sixth switching elements S5 and S6 of the primary circuit 21 are constantly OFF, and while the phase shift is performed in the third and fourth switching elements S3 and S4, the PWM control is performed by switching the first to fourth switching elements S1-S4.

Based on such first to fourth charging switching control information, the control unit 17c changes the switching patterns of the primary switching elements S1-S6 and the secondary switching elements S7 and S8 in the charging operation, and outputs a given control signal to the drive circuit 17d (the discharging operation will be described later).

As illustrated in Fig. 3, a PWM frequency $T_{PWM}$ and a dead time $T_d$ are inputted to the drive circuit 17d together with the control signal. Based on the inputted information, the drive circuit 17d outputs drive voltages to the first to tenth switching elements S1-S10. Thus, the converter mechanism 16 is activated and the requested charging operation is performed in the DC/DC converter 5.

(Specific Example of Switching Control during Charging Operation)

Fig. 6 illustrates various waveforms in the second charging voltage range and the switching patterns of the switching elements S1-S6 of the primary circuit 21.

The waveforms illustrated in the upper part of Fig. 6 are triangular waves used for the PWM control. The time chart illustrated in the middle of Fig. 6 illustrates the switching patterns of the switching elements S1-S6 corresponding to the PWM control. The waveform illustrated in the lower part of Fig. 6 is an image diagram of the waveform of the transformer voltage $V_{TR}$ obtained in these switching patterns.

The cycle of the triangular wave is switching frequency Tsw. The first parameter $d_a{}^*$ sets a PWM signal having a pulse width corresponding to a period $T_A$ during which the first and fourth switching elements S1 and S4 are turned ON based on the triangular wave. The second parameter $d_b{}^*$ sets a PWM signal having a pulse width corresponding to a period $T_B$ during which the second and third switching elements S2 and S3 are turned ON based on the triangular wave. The cycle of the transformer voltage $V_{TR}$ is the PWM frequency $T_{PWM}$.

A third parameter $d_c{}^*$ and a fourth parameter $d_d{}^*$ are calculated by the following equations using the reference parameter $d_{ctl}{}^*$, the first parameter $d_a{}^*$, and the second parameter $d_b{}^*$.

$$\text{Third parameter } d_c{}^* = \text{Reference parameter } d_{ctl}{}^* + \text{First parameter } d_a{}^*$$

$$\text{Fourth parameter } d_d{}^* = \text{Reference parameter } d_{ctl}{}^* + \text{Second parameter } d_b{}^*$$

Here, the first parameter $d_a{}^*$, the second parameter $d_b{}^*$, and the reference parameter $d_{ctl}{}^*$ are all between 0 and 0.5. In other words, a duty ratio setting range is between 0% and 50%.

The third parameter $d_c{}^*$ sets a PWM signal having a pulse width corresponding to a period Tc during which the fifth switching element S5 is turned ON based on the triangular wave. The fourth parameter $d_d{}^*$ sets a PWM signal having a pulse width corresponding to a period $T_D$ during which the sixth switching element S6 is turned ON based on the triangular wave.

By performing such a PWM control, positive and negative waveforms of the transformer voltage $V_{TR}$ can be made uniform, and thus, a phenomenon of DC bias magnetization can be suppressed.

In the example of Fig. 6, the duty ratio is at its highest (first parameter $d_a{}^* =$ second parameter $d_b{}^* = 0.5$, $d_c{}^* = d_d{}^*$). As a result, the period $T_A =$ the period $T_B$, and the period Tc = the period $T_D$, and the transformer voltage $V_{TR}$ fluctuates at 1/2 of the primary voltage $V_{in}$, and the voltage waveform inputted to the LLC circuit 23 can be maintained as a sine wave. The ZVS is possible even if the secondary voltage $V_{out}$ exceeds 1/2 of the primary voltage $V_{in}$ (i.e., the primary half voltage $V_{in(LO)}$).

The balance of the charging voltages of the two primary capacitors C1 and C2 can also be stabilized. Further, by changing the reference parameter $d_{ctl}{}^*$, it becomes possible to control a transformer current $I_{TR}$.

Fig. 7 illustrates the switching patterns of the switching elements S1-S8 in the primary circuit 21 and the secondary circuit 22 within the first charging voltage range. The switching patterns of the switching elements S1-S6 in the primary circuit 21 are the same as those in the second charging voltage range illustrated in Fig. 6.

In the first charging voltage range, unlike the second charging voltage range, a phase shift is performed in the seventh and eighth switching elements S7 and S8 of the secondary circuit 22. As a result, unlike the second charging voltage range, the seventh and eighth switching elements S7 and S8 are shifted in the phase from the switching patterns of the other switching elements S1-S6 by the phase angle $\Delta\varphi$.

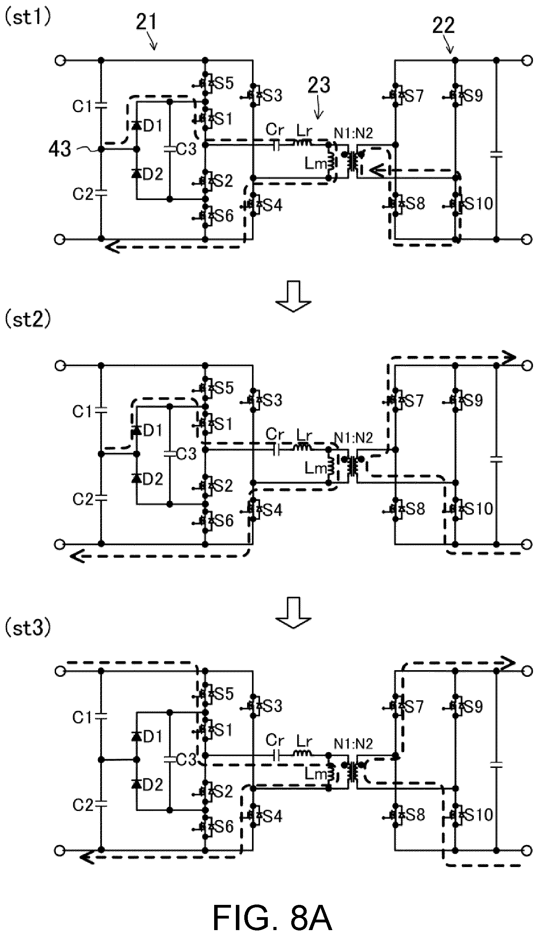

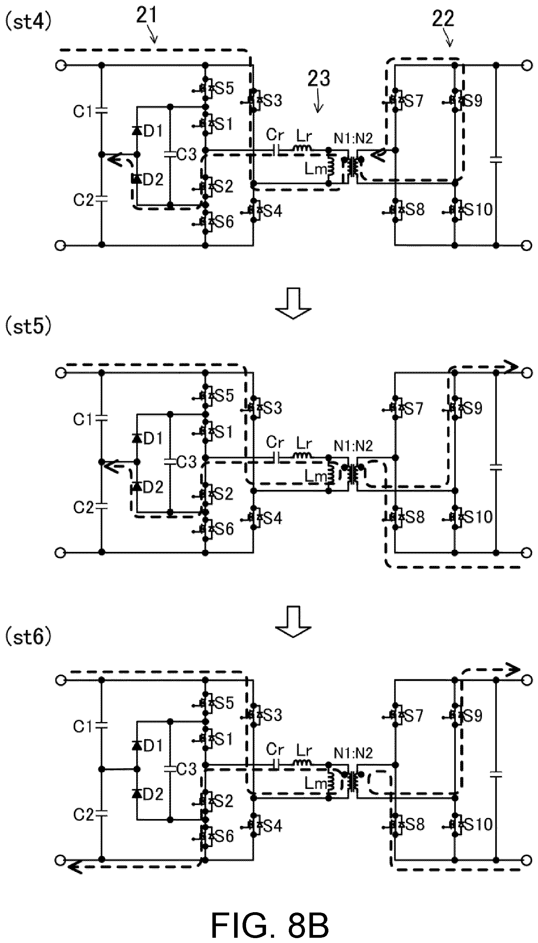

Figs. 8A and 8B illustrate image diagrams of the current paths of the converter circuit 15 in first to sixth states st1 to st6 illustrated in the upper part of Fig. 7. In the first charging voltage range, the current path changes in the order of the first state st1, the second state st2, the third state st3, the second state st2, the fourth state st4, the fifth state st5, the sixth state st6, and the fifth state st5. These changes are then repeated.

In the first state st1, the first, fourth, and eighth switching elements S1, S4, and S8 are ON, and the second, third, and fifth to seventh switching elements S2, S3, and S5-S7 are OFF. As a result, as indicated by the dashed arrow in the left part of the upper diagram of Fig. 8A, in the primary circuit 21, the current flows out from the intermediate voltage output part 43, and the transformer current $I_{TR}$ flows to the primary coil 20a (from the positive polarity side to the negative polarity side) of the transformer 20. Here, the primary half voltage $V_{in(LO)}$ acts on the LLC circuit 23.

As a result, in the secondary circuit 22, as indicated by the dashed arrow in the right part of the upper diagram of Fig. 8A, the current flows to the secondary coil 20b (from the negative polarity side to the positive polarity side) of the transformer 20, and flows through a path inside the secondary circuit 22 passing through the eighth switching element S8 and the tenth switching element S10 (flyback diode 24) in this order. That is, here, no current flows outside from the converter circuit 15.

In the second state st2, the first, fourth and seventh switching elements S1, S4, and S7 are ON, and the second, third, fifth, sixth, and eighth switching elements S2, S3, S5, S6, and S8 are OFF. As a result, as indicated by the dashed arrow in the left part of the middle diagram of Fig. 8A, the current path in the primary circuit 21 is the same as that in the first state st1.

Meanwhile, in the secondary circuit 22, as indicated by the dashed arrow in the right part of the middle diagram of Fig. 8A, current flows in from the secondary input/output terminal 50 (negative polarity side), passes through the tenth switching element S10 (flyback diode 24), the secondary coil 20b of the transformer 20 (from the negative polarity side to the positive polarity side), and the seventh switching element S7 (flyback diode 24) in this order, and is outputted from the secondary input/output terminal 50 (positive polarity side). Therefore, here, current flows outside from the converter circuit 15.

In the third state st3, the first, fourth, fifth, and seventh switching elements S1, S4, S5, and S7 are ON, and the second, third, sixth, and eighth switching elements S2, S3, S6, and S8 are OFF. As a result, as indicated by the dashed arrow in the left part of the lower diagram of Fig. 8A, in the primary circuit 21, current flows in from the primary input/output terminal 30 (positive polarity side), causing the transformer current $I_{TR}$ to flow to the primary coil 20a (from the positive polarity side to the negative polarity side) of the transformer 20 and flow out from the primary input/output terminal 30 (negative polarity side). Here, the primary voltage $V_{in}$ acts on the LLC circuit 23.

In the secondary circuit 22, as indicated by the dashed arrow in the right part of the lower diagram of Fig. 8A, the current path is the same as that in the second state st2. Therefore, here, current flows outside from the converter circuit 15.

Following the third state st3, the converter circuit 15 enters the second state st2 again, then the fourth state st4.

In the fourth state st4, the second, third, and seventh switching elements S2, S3, and S7 are ON, and the first, fourth to sixth, and eighth switching elements S1, S4-S6, and S8 are OFF. As a result, as indicated by the dashed arrow in the left part of the upper diagram of Fig. 8B, in the primary circuit 21, current flows from the primary input/output terminal 30 (positive polarity side) at the primary voltage $V_{in}$, causing the transformer current $I_{TR}$ to flow through the primary coil 20a (from the negative polarity side to the positive polarity side) of the transformer 20 and flow into the intermediate voltage output part 43. The primary capacitor C2 (negative polarity side) is thus charged.

Accordingly, in the secondary circuit 22, as indicated by the dashed arrow in the right part of the upper diagram of Fig. 8B, current flows through the secondary coil 20b (from the positive polarity side to the negative polarity side) of the transformer 20, and flows inside the secondary circuit 22 through the ninth switching element S9 (flyback diode 24) and the seventh switching element S7 in this order. In other words, here, no current flows outside from the converter circuit 15.

In the fifth state st5, the second, third, and eighth switching elements S2, S3, and S8 are ON, and the first and fourth to seventh switching elements S1 and S4-S7 are OFF. As a result, as indicated by the dashed arrow in the left part of the middle diagram of Fig. 8B, the current path in the primary circuit 21 is the same as that in the fourth state st4.

Meanwhile, in the secondary circuit 22, as indicated by the dashed arrow in the right part of the middle diagram of Fig. 8B, current flows in from the secondary input/output terminal 50 (negative polarity side), passes through the eighth switching element S8 (flyback diode 24), the secondary coil 20b (from the positive polarity side to the negative polarity side) of the transformer 20, and the ninth switching element S9 (flyback diode 24) in this order, and is outputted from the secondary input/output terminal 50 (positive polarity side). Therefore, here, current flows outside from the converter circuit 15.

In the sixth state st6, the second, third, sixth, and eighth switching elements S2, S3, S6, and S8 are ON, and the first, fourth, fifth, and seventh switching elements S1, S4, S5, and S7 are OFF. As a result, in the primary circuit 21, as indicated by the dashed arrow in the left part of the lower diagram of Fig. 8B, current flows in from the primary input/output terminal 30 (positive polarity side) at the primary voltage $V_{in}$, causing the transformer current $I_{TR}$ to flow to the primary coil 20a (from the negative polarity side to the positive polarity side) of the transformer 20 and flow out from the primary input/output terminal 30 (negative polarity side).

In the secondary circuit 22, as indicated by the dashed arrow in the right part of the lower diagram of Fig. 8B, the current path is the same as that in the fifth state st5. Therefore, here, current flows outside from the converter circuit 15.

Following the sixth state st6, the converter circuit 15 enters the fifth state st5 again. Thereafter, the state enters the first state st1 again, and then repeats shifting as described above (e.g., shifting to the second state st2, etc.).

Thus, when the DC voltage outputted during the charging operation is greater than the primary half voltage $V_{in(LO)}$, the controller 17 switches between the primary voltage $V_{in}$ and the primary half voltage $V_{in(LO)}$ and applies it to the LLC circuit 23 while controlling the duty ratio.

Therefore, as described above, the positive and negative waveforms of the transformer voltage $V_{TR}$ can be made uniformly, suppressing the phenomenon of DC bias magnetism. By maximizing the duty ratio, the voltage waveform inputted to the LLC circuit 23 can be maintained as a sine wave.

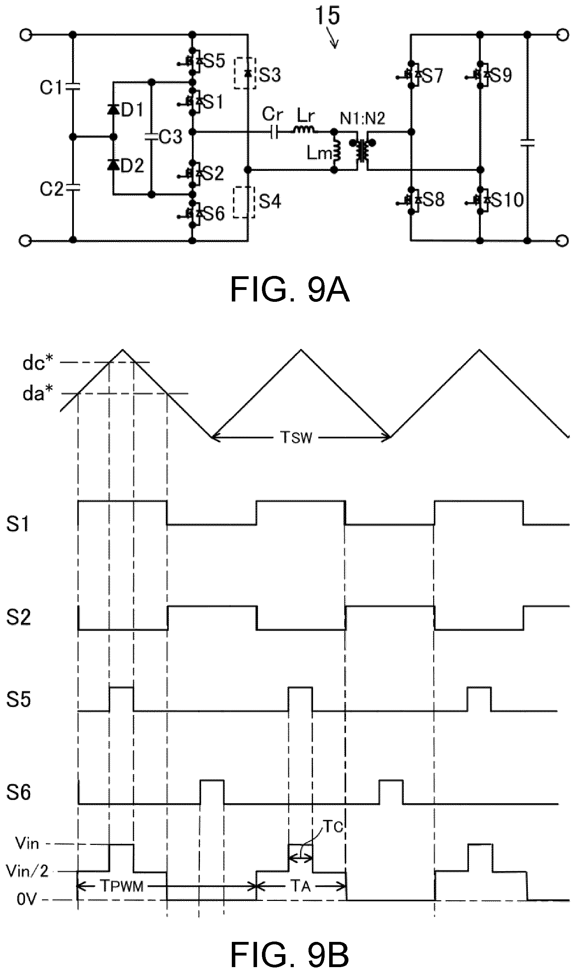

Figs. 9A and 9B illustrate the switching patterns of the converter circuit 15 and the switching elements S1, S2, S5, and S6 in the primary circuit 21 and the secondary circuit 22 in the third charging voltage range.

In the third charging voltage range, the third switching element S3 is constantly OFF, and the fourth switching element S4 is constantly ON. Therefore, the converter circuit 15 is equivalent to the circuit illustrated in Fig. 9A.

In this case, in accordance with the above example, the switching patterns and waveforms of the transformer voltage $V_{TR}$ as illustrated in Fig. 9B are obtained, which equivalates to a half-bridge LLC circuit as illustrated in the equivalent circuit of Fig. 9A. Although the half-bridge LLC circuit is generally for small capacity, in the present disclosure, the output voltage range during this operation is controlled as an output voltage operating range of $V_{in}/4$ to $V_{in}/2$ as illustrated in Part (a) of Fig. 4.

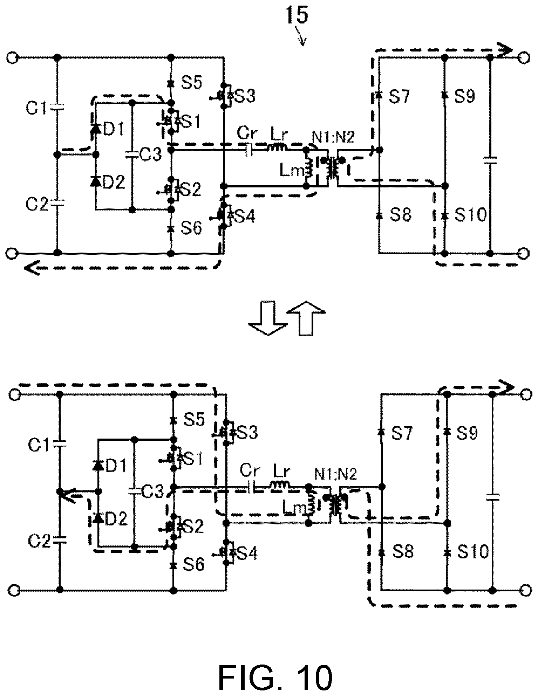

Fig. 10 illustrates image diagrams of the equivalent circuit of the converter circuit 15 and its current path in the fourth charging voltage range. In the fourth charging voltage range, the second and fifth states st2 and st5 in the first charging voltage range described above are substantially repeated while a phase shift is performed in the switching S3 and S4 of the third and fourth switching elements.

(Control during Discharging Operation by Controller)

Next, a control during the discharging operation by the controller 17 is described.

This converter circuit 15 is not provided with a resonant capacitor in the secondary circuit 22. However, all of the primary switching elements S1-S6 are turned OFF, and the flyback diodes 24 thereof are used. In this state, by switching the secondary switching elements S7-S10, the converter circuit 15 can perform the discharging operation in which power is inputted from the secondary side and outputted from the primary side.

However, in this case, only a square wave is applied to the magnetizing inductor Lm, and thus it not possible to perform a resonant operation with the primary resonant capacitor Cr. Therefore, a normal series resonant type operation is performed which involves as the resonant elements during the discharge solely the primary resonant capacitor Cr and the primary resonant inductor Lr. As a result, the operating range of the input/output power during the discharge is basically limited by the turns ratio of the transformer 20. In other words, the secondary voltage $V_{out}$ becomes the same as the primary voltage $V_{in}$.

However, the primary voltage $V_{in}$ may be higher than the secondary voltage $V_{out}$ during the discharge. In this regard, a step-up operation can be realized by performing the phase shift in the third and fourth switching elements S3 and S4 of the primary circuit 21. Therefore, in this DC/DC converter 5, the primary voltage $V_{in}$ can be made higher than the secondary voltage $V_{out}$. In addition, since the AC/DC converter 6 can perform a constant control of the AC output voltage during the discharge, the PWM control that changes the duty ratio is not required.

As a result, during the discharging operation, the operating range is divided into first and second discharging voltage ranges according to the magnitude relationship between the primary voltage $V_{in}$ (output voltage) and the secondary voltage $V_{out}$ (input voltage), and, as illustrated in Fig. 4B, the switching control information is set for each of the ranges (first and second discharging switching control information).

According to the first and second discharging switching control information, in all the discharging voltage ranges, the PWM control with a duty ratio fixed at 50% is performed in all the switching elements S7-S10 of the secondary circuit 22.

The first discharging voltage range indicates a case where the secondary voltage $V_{out}$ and the primary voltage $V_{in}$ are the same as each other. According to the first discharging switching control information, in the first discharging voltage range, the full-bridge method is used as the control method, and all the switching elements S1-S6 of the primary circuit 21 are constantly OFF.

The second discharging voltage range indicates a case where the primary voltage $V_{in}$ is higher than the secondary voltage $V_{out}$. According to the second discharging switching control information, in the second discharging voltage range, the first, second, fifth, and sixth switching elements S1, S2, S5, and S6 of the primary circuit 21 are constantly OFF, and the phase shift is performed in the third and fourth switching elements S3 and S4.

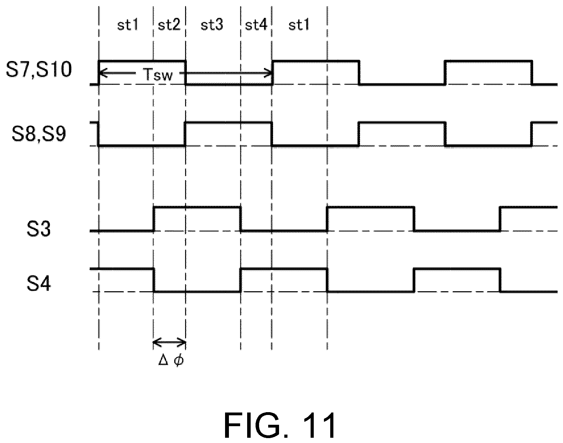

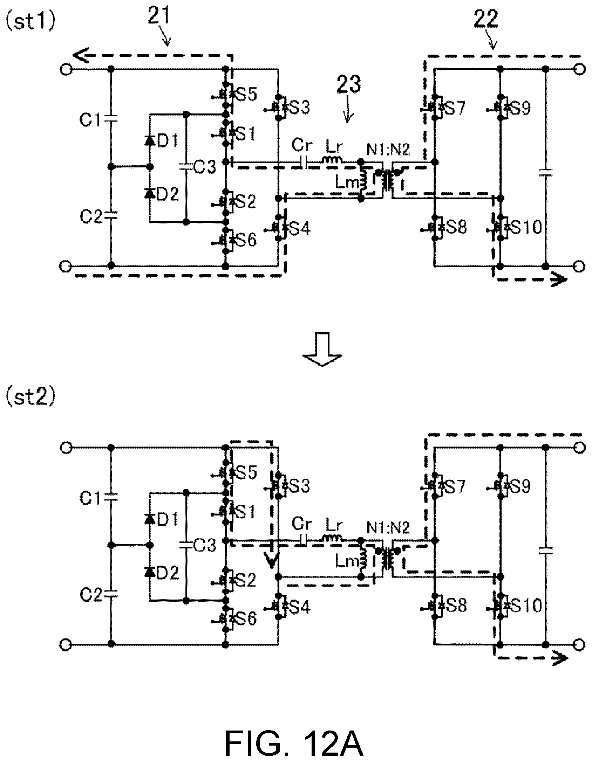

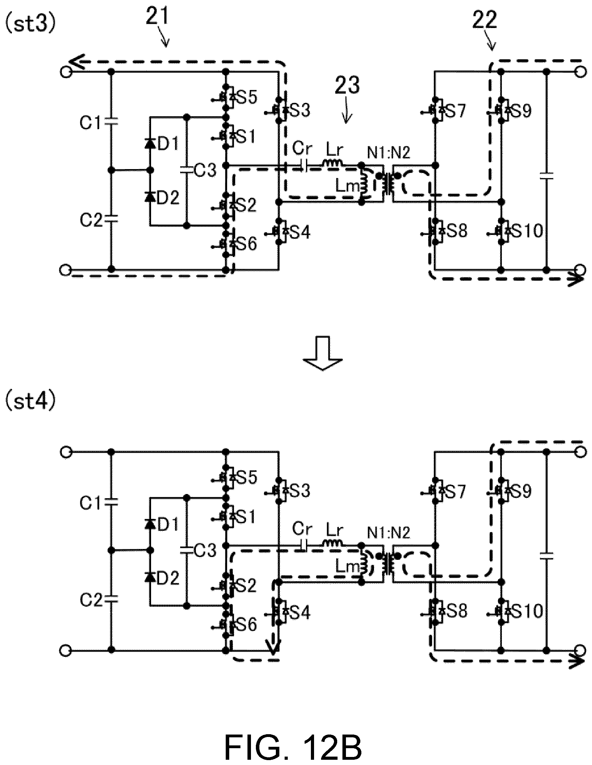

Fig. 11 illustrates the switching patterns of the switching elements S3, S4, and S7-S10 in the primary circuit 21 and the secondary circuit 22 within the second discharging voltage range. Figs. 12A and 12B illustrate image diagrams of the current paths of the converter circuit 15 in the first to fourth states st1 to st4 illustrated in the upper part of Fig. 11. In the second discharging voltage range, the current path changes in the order of the first state st1, the second state st2, the third state st3, and the fourth state st4. Then, this change is repeated.

Note that, in the first discharging voltage range, the second state st2 and the fourth state st4 which are associated with the phase shift do not exist. Therefore, since only the first state st1 and the third state st3 are repeated, a detailed description thereof is omitted.

In the first state st1, the seventh, tenth, and fourth switching elements S7, S10, and S4 are ON, and the eighth, ninth, and third switching elements S8, S9, and S3 are OFF. As a result, as indicated by the dashed arrow in the right part of the upper diagram of Fig. 12A, in the secondary circuit 22, current flows in from the secondary input/output terminal 50 (positive polarity side), which is led to the secondary coil 20b of the transformer 20 (from the positive polarity side to the negative polarity side), and flows out from the secondary input/output terminal 50 (negative polarity side).

Accordingly, in the primary circuit 21, as indicated by the dashed arrow in the left part of the upper diagram of 12A, current flows in from the primary input/output terminal 30 (negative polarity side), passes through the fourth switching element S4 (flyback diode 24), the primary coil 20a of the transformer 20 (from the negative polarity side to the positive polarity side), and the first and fifth switching elements S1 and S5 (flyback diodes 24) in this order, and is outputted from the primary input/output terminal 30 (positive polarity side). Therefore, here, current flows outside from the converter circuit 15.

In the second state st2, the seventh, tenth, and third switching elements S7, S10, and S3 are ON, and the eighth, ninth, and fourth switching elements S8, S9, and S4 are OFF. As a result, as indicated by the dashed arrow in the right part of the lower diagram of Fig. 12A, the current path in the secondary circuit 22 is the same as that in the first state st1.

Meanwhile, in the primary circuit 21, as indicated by the dashed arrow in the left part of the lower diagram of Fig. 12A, current flows to the primary coil 20a of the transformer 20 (from the negative polarity side to the positive polarity side), and passes through a path inside the primary circuit 21 passing through the first and fifth switching elements S 1 and S5 (flyback diodes 24), and the third switching element S3 in this order. In other words, here, no current flows outside from the converter circuit 15.

In the third state st3, the eighth, ninth, and third switching elements S8, S9, and S3 are ON, and the seventh, tenth, and fourth switching elements S7, S10, and S4 are OFF. As a result, as indicated by the dashed arrow in the right part of the upper diagram of Fig. 12B, in the secondary circuit 22, current flows in from the secondary input/output terminal 50 (positive polarity side), which is led to the secondary coil 20b of the transformer 20 (from the negative polarity side to the positive polarity side), and flows out from the secondary input/output terminal 50 (negative polarity side).

Accordingly, in the primary circuit 21, as indicated by the dashed arrow in the left part of the upper diagram of 12B, current flows in from the primary input/output terminal 30 (negative polarity side), passes through the sixth and second switching elements S6 and S2 (flyback diodes 24), and the primary coil 20a of the transformer 20 (from the positive polarity side to the negative polarity side), and the third switching element S3 (flyback diode 24) in this order, and is outputted from the primary input/output terminal 30 (positive polarity side). Therefore, here, current flows outside from the converter circuit 15.

In the fourth state st4, the eighth, ninth, and fourth switching elements S8, S9, and S4 are ON, and the seventh, tenth, and third switching elements S7, S10, and S3 are OFF. As a result, as indicated by the dashed arrow in the right part of the lower diagram of Fig. 12B, the current path in the secondary circuit 22 is the same as that in the third state st3.

Accordingly, in the primary circuit 21, as indicated by the dashed arrow in the left part of the lower diagram of Fig. 12B, current flows to the primary coil 20a of the transformer 20 (from the positive polarity side to the negative polarity side), and flows through a path inside the primary circuit 21 passing through the fourth, sixth, and second switching elements S4, S6, and S2 (flyback diodes 24) in this order. That is, here, no current flows outside from the converter circuit 15.

Following the fourth state st4, the converter circuit 15 enters the first state st1 again. Thereafter, the state repeats shifting as described above (e.g., shifting to the second state st2, etc.).

<Verification of Effects>

Simulations were performed to verify the effect(s) of the DC/DC converter 5. First, the stability of the primary half voltage $V_{in(LO)}$ during the charging was verified.

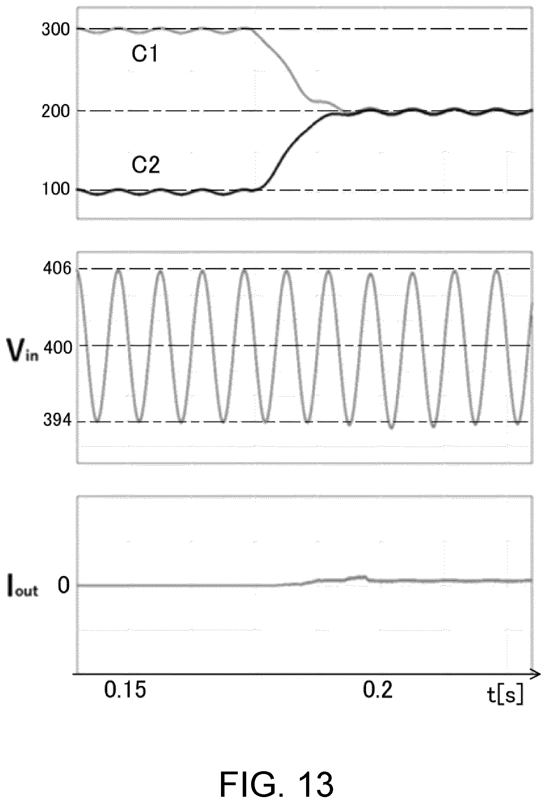

Fig. 13 illustrates the verification result. The upper graph of Fig. 13 illustrates a time-dependent change in voltage when starting the two primary capacitors C1 and C2. The middle graph of Fig. 13 illustrates a time-dependent change in the input voltage (primary voltage $V_{in}$) corresponding to the change illustrated in the upper graph, and the lower graph of Fig. 13 illustrates a time-dependent change in the output current $I_{out}$ corresponding to the change illustrated in the middle graph.

It was confirmed that a voltage difference between the two primary capacitors C1 and C2 is 200V when starting, and then immediately converges to 0, that is, the primary half voltage $V_{in(LO)}$. Note that the pulsation of the input voltage is caused by the output from the PFC circuit.

Next, results of simulations performed on two scenarios in the charging operation in which the input and output voltages are different are described. In Scenario 1, the input voltage (primary voltage $V_{in}$) is 400 V, and the output voltage (secondary voltage $V_{out}$) is 300 V (second charging voltage range). In Scenario 2, the input voltage (primary voltage $V_{in}$) is 400 V, and the output voltage (secondary voltage $V_{out}$) is 450 V (first charging voltage range). The output power is 4 kW in both scenarios.

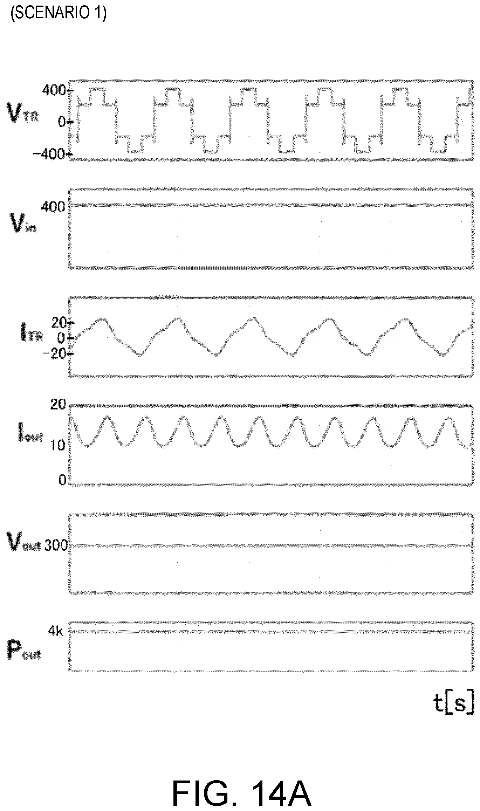

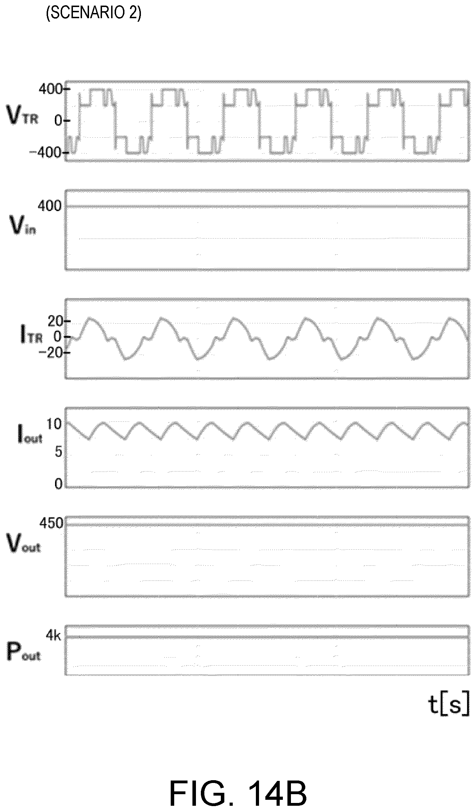

Figs. 14A and 14B illustrate the time-dependent changes of the main factors, such as the transformer voltage $V_{TR}$, in each of the simulations for Scenarios 1 and 2.

As illustrated in Figs. 14A and 14B, it was confirmed that step-up and step-down operations can be realized with constant input voltage and the charging can be performed with constant power. Therefore, according to the present disclosure, the applicable power conversion range can be effectively expanded to both the charging side and the discharging side, and a small and highly-efficient power conversion device can be realized.

<Modification of Bidirectional Isolated LLC Resonant Circuit>

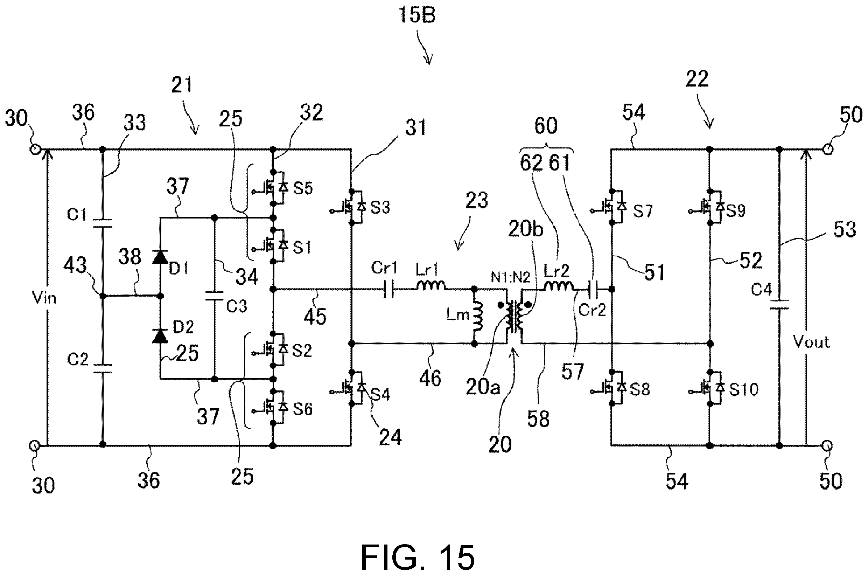

Fig. 15 illustrates a modification of the converter circuit 15 described above (second converter circuit 15B). The second converter circuit 15B is different from the converter circuit 15 described above in that an LLC circuit is also provided on the secondary circuit 22 side. Since the second converter circuit 15B is otherwise the same, the same components are given the same reference alphanumeric symbols, and the description thereof is omitted.

That is, the second converter circuit 15B also has the LLC circuit (secondary LLC circuit 60) located between the transformer 20 and the secondary circuit 22 (so-called CLLC converter). Specifically, the secondary LLC circuit 60 has a secondary resonant capacitor 61 and a secondary resonant inductor 62 (leakage inductance) arranged in series in this order from the sixth leg 51 side in the secondary upper relay wiring 57. A first resonant capacitor Cr1 and a first resonant inductor Lr1 (leakage inductance) are arranged in series in this order from the second leg 32 side in the primary upper relay wiring 45. A second resonant capacitor Cr1 and a second resonant inductor Lr2 are arranged in series in this order from the secondary coil 20b side to the sixth leg 51. A secondary magnetizing inductor may be connected in parallel with the secondary coil 20b.

The secondary resonant capacitor 61 and the secondary resonant inductor 62 constitute the secondary LLC circuit 60. Therefore, according to the second converter circuit 15B, the power range during the discharging operation can be further expanded.

<Another Embodiment of Bidirectional Isolated LLC Resonant Circuit>

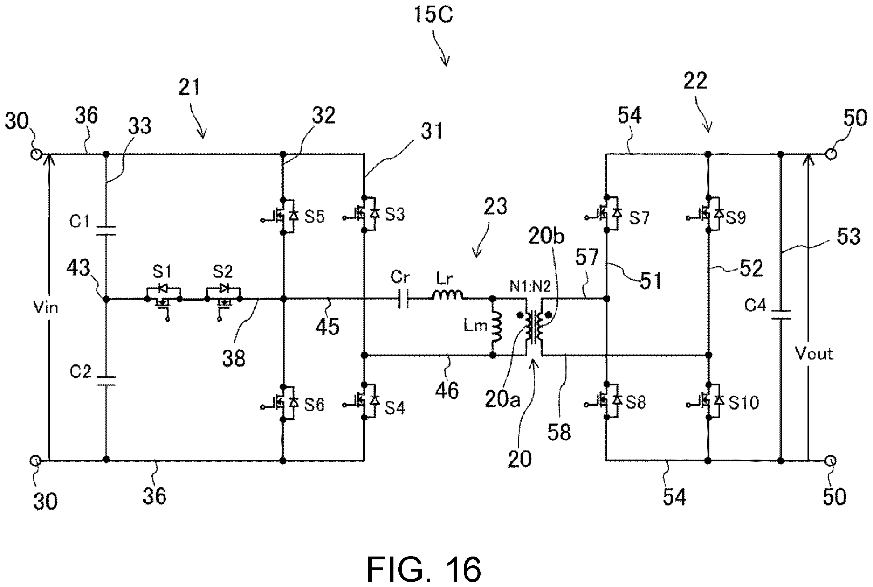

Fig. 16 illustrates another embodiment of the converter circuit 15 (third converter circuit 15C). The third converter circuit 15C has a different configuration from the converter circuit 15 in the primary side circuit 21 described above. Since a secondary circuit of the third converter circuit 15C is the same as the secondary side circuit 22 of the converter circuit 15 described above, the same components are given the same reference alphanumeric symbols, and the description thereof is omitted.

The primary circuit 21 of the third converter circuit 15C is also the same as the converter circuit 15 described above in that it has a primary input/output terminal 30 and six primary switching elements S1 to S6, a third leg 33 in which two primary capacitors C1 and C2 are arranged in series, and a first leg 31 in which two primary switching elements S3 and S4 are arranged in series.

Additionally, the primary circuit 21 of the third converter circuit 15C has a second leg 32 in which two primary switching elements S5 and S6 are arranged in series. The first leg 31, the second leg 32, and the third leg 33 are connected in parallel to each other between a pair of primary main lines 36 of which one end is provided with a primary input/output terminal 30.

A single coupling line 38 is connected to a position of the second leg 32 between the two primary switching elements S5 and S6 and a position of the third leg 33 between the two primary capacitors C1 and C2. Two primary switching elements S1 and S2 are arranged in series on this coupling line 38 so that the current flows inwardly toward each other.

The details of the control of the third converter circuit 15C are the same as those of the converter circuit 15 described above. That is, the control method and the switching pattern of each of the switching elements S1-S10 of the third converter circuit 15C are the same as those of the converter circuit 15 described above.

Although not illustrated, the third converter circuit 15C may also further have an LLC circuit (secondary LLC circuit 60) located between the transformer 20 and the secondary circuit 22, similar to the second converter circuit 15B.

It should be understood that the embodiments herein are illustrative and not restrictive, since the scope of the invention is defined by the appended claims rather than by the description preceding them, and all changes that fall within metes and bounds of the claims, or equivalence of such metes and bounds thereof, are therefore intended to be embraced by the claims.

DESCRIPTION OF REFERENCE CHARACTERS

| | |
|---|---|
| 1 | Vehicle |
| 2 | Commercial Power Source |
| 3 | Charging System |
| 4 | Battery |
| 5 | DC/DC Converter |
| 6 | AC/DC Converter |
| 15 | Bidirectional Isolated LLC Resonant Circuit |
| 16 | Converter Mechanism |
| 17 | Controller |
| 17a | Voltage Balance Regulator |
| 17b | Current Regulator |
| 17c | Control Unit |
| 17d | Drive Circuit |
| 20 | Transformer |
| 21 | Primary Circuit |
| 22 | Secondary Circuit |
| 23 | LLC Circuit |
| 25 | Element Pair |
| 30 | Primary Input/Output Terminal |
| 31 | First Leg |
| 32 | Second Leg |
| 33 | Third Leg |
| 34 | Fourth Leg |
| 35 | Fifth Leg |
| 36 | Primary Main Line |
| 37 | Bypass Line |
| 38 | Coupling Line |
| 43 | Intermediate Voltage Output Part |
| 45 | Primary Upper Relay Wiring |
| 46 | Primary Lower Relay Wiring |
| 50 | Secondary Input/Output Terminal |
| 51 | Sixth Leg |
| 52 | Seventh Leg |
| 53 | Eighth Leg |
| 54 | Secondary Main Line |
| 55 | Secondary Capacitor |
| 57 | Secondary Upper Relay Wiring |
| 58 | Secondary Lower Relay Wiring |
| 60 | Secondary LLC Circuit |
| 61 | Secondary Resonant Capacitor |
| 62 | Secondary Resonant Inductor |
| S1-S10 | Switching Elements |
| D 1, D2 | Diode |
| C1, C2 | Primary Capacitor |
| C3 | Intermediate Capacitor |
| C4 | Secondary Capacitor |
| Cr | Primary Resonant Capacitor |
| Lr | Primary Resonant Inductor |
| Lm | Magnetizing Inductor |

**Claims**

**1.** A power converter (6) comprising:

a converter mechanism (16) having a bidirectional isolated LLC resonant circuit (15); and
a controller (17) configured to control the converter mechanism (16),
wherein the bidirectional isolated LLC resonant circuit (15) includes:

a transformer (20) having a primary coil (20a) and a secondary coil (20b);
a primary circuit (21) disposed on a primary side of the transformer (20) and having a primary input/output terminal pair (30) and six primary switching elements (S1-S6);
a secondary circuit (22) disposed on a secondary side of the transformer (20) and having a secondary input/output terminal pair (50) and four secondary switching elements (S7-S10); and
an LLC circuit (23) disposed between the transformer (20) and the primary circuit (21),

wherein the bidirectional isolated LLC resonant circuit (15) performs a charging operation in which DC voltage is inputted to the primary input/output terminal pair (30) and outputted from the secondary input/output terminal pair (50) and a discharging operation in which the DC voltage is inputted to the secondary input/output terminal pair (50) and outputted from the primary input/output terminal pair (30), and
wherein the controller (17) has switching control information related to a duty ratio and a phase shift that are set according to a magnitude relationship of the inputted/outputted DC voltages, and changes a switching pattern of each of the primary and secondary switching elements (S1-S10) in the charging operation and the discharging operation based on the switching control information.

2. The power converter (6) of claim 1, wherein the primary circuit (21) further has an intermediate voltage output part (43) at which primary half voltage is applied to the LLC circuit (23), the primary half voltage being an intermediate voltage of the primary voltage that is the DC voltage inputted to the primary input/output terminal pair (30), and
wherein, in a case where the DC voltage outputted in the charging operation is larger than the primary half voltage, the controller (17) switches the voltage that is applied to the LLC circuit (23) between the primary voltage and the primary half voltage, while controlling the duty ratio.

3. The power converter (6) of claim 1, wherein the primary circuit (21) has:

a first leg (31) provided with two of the primary switching elements (S3, S4) arranged in series;
a second leg (32) provided with two element pairs (25) arranged in series, each of the two element pairs (25) constituted by two of the primary switching elements (S1, S2, S5, S6) arranged in series;
a third leg (33) provided with two primary capacitors (C1, C2) arranged in series;
a fourth leg (34) provided with one intermediate capacitor (C3);
a fifth leg (35) provided with two diodes (D1, D2) arranged in series;
a pair of primary main lines (36) provided at one end with the primary input/output terminal pair (30) and connected to each other by the first, second, and third legs (31, 32, 33) that are arranged in parallel to each other;
a pair of bypass lines (37) connected to the second leg (32) between each of the element pairs (25) in parallel to each other, the pair of bypass lines (37) connected to each other by the fourth and fifth legs (34, 35), the fourth and fifth legs arranged in parallel to each other; and
a coupling line (38) connected to a position of the fifth leg (35) between the two diodes (D1, D2) and a position of the third leg (33) between the two primary capacitors (C1, C2),
wherein the secondary circuit (22) has:

a sixth leg (51) and a seventh leg (52), each provided with two of the secondary switching elements (S7, S8, S9, S10) arranged in series;
an eighth leg (53) provided with one secondary capacitor (C4); and
a pair of secondary main lines (54) provided at one end with the secondary input/output terminal pair (50) and connected to each other by the sixth, seventh, and eighth legs (51, 52, 53) arranged in parallel to each other,

wherein the power converter (6) further comprises:

a primary upper relay wiring (45) connecting an end part of the primary coil (20a) on a positive polarity side to a position of the second leg (32) between the two element pairs (25);
a primary lower relay wiring (46) connecting an end part of the primary coil (20a) on a negative polarity side to a position of the first leg (31) between the two primary switching elements (S3, S4);
a secondary upper relay wiring (57) connecting an end part of the secondary coil (20b) on a positive polarity side to a position of the sixth leg (51) between the two secondary switching elements (S7, S8); and

a secondary lower relay wiring (58) connecting an end part of the secondary coil (20b) on a negative polarity side to a position of the seventh leg (52) between the two secondary switching elements (S9, S10), and

wherein the LLC circuit (23) has a primary resonant capacitor (Cr) and a primary resonant inductor (Lr) arranged in series in the primary upper relay wiring (45).

4. The power converter (6) of claim 2, wherein the primary circuit (21) has:

a first leg (31) provided with two of the primary switching elements (S3, S4) arranged in series;
a second leg (32) provided with two element pairs (25) arranged in series, each of the two element pairs (25) constituted by two of the primary switching elements (S1, S2, S5, S6) arranged in series;
a third leg (33) provided with two primary capacitors (C1, C2) arranged in series;
a fourth leg (34) provided with one intermediate capacitor (C3);
a fifth leg (35) provided with two diodes (D1, D2) arranged in series;
a pair of primary main lines (36) provided at one end with the primary input/output terminal pair (30) and connected to each other by the first, second, and third legs (31, 32, 33) arranged in parallel to each other;
a pair of bypass lines (37) connected to the second leg (32) between each of the element pairs (25) in parallel to each other, the pair of bypass lines (37) connected to each other by the fourth and fifth legs (34, 35), the fourth and fifth legs arranged in parallel to each other; and
a coupling line (38) connected to a position of the fifth leg (35) between the two diodes (D1, D2) and a position of the third leg (33) between the two primary capacitors (C1, C2),
wherein the secondary circuit (22) has:

a sixth leg (51) and a seventh leg (52), each provided with two of the secondary switching elements (S7, S8, S9, S10) arranged in series;
an eighth leg (53) provided with one secondary capacitor (C4); and
a pair of secondary main lines (54) provided at one end with the secondary input/output terminal pair (50) and connected to each other by the sixth, seventh, and eighth legs (51, 52, 53) arranged in parallel to each other,

wherein the power converter (6) further comprises:

a primary upper relay wiring (45) connecting an end part of the primary coil (20a) on a positive polarity side to a position of the second leg (32) between the two element pairs (25);
a primary lower relay wiring (46) connecting an end part of the primary coil (20a) on a negative polarity side to a position of the first leg (31) between the two primary switching elements (S3, S4);
a secondary upper relay wiring (57) connecting an end part of the secondary coil (20b) on a positive polarity side to a position of the sixth leg (51) between the two secondary switching elements (S7, S8); and
a secondary lower relay wiring (58) connecting an end part of the secondary coil (20b) on a negative polarity side to a position of the seventh leg (52) between the two secondary switching elements (S9, S10), and

wherein the LLC circuit (23) has a primary resonant capacitor (Cr) and a primary resonant inductor (Lr) arranged in series in the primary upper relay wiring (45).

5. The power converter (6) of claim 3, wherein the bidirectional isolated LLC resonant circuit (15) further includes a secondary LLC circuit (60) located between the transformer (20) and the secondary circuit (22).

6. The power converter (6) of claim 4, wherein the bidirectional isolated LLC resonant circuit (15) further includes a secondary LLC circuit (60) located between the transformer (20) and the secondary circuit (22).

7. The power converter (6) of claim 1, wherein the primary circuit (21) has:

a first leg (31) and a second leg (32), each provided with two of the primary switching elements (S3, S4, S5, S6) arranged in series;
a third leg (33) provided with two primary capacitors (C1, C2) arranged in series;
a pair of primary main lines (36) provided at one end with the primary input/output terminal pair (30) and connected to each other by the first, second, and third legs (31, 32, 33) arranged in parallel to each other; and
a coupling line (38) provided with two of the primary switching elements (S1, S2) arranged in series so that current flows towards each other, and connected to a position of the second leg (32) between the two primary switching elements (S5, S6) and a position of the third leg (33) between the two primary capacitors (C1, C2), wherein the secondary circuit (22) has:

> a sixth leg (51) and a seventh leg (52), each provided with two of the secondary switching elements (S7, S8, S9, S10) arranged in series;
> an eighth leg (53) provided with one secondary capacitor (C4); and
> a pair of secondary main lines (54) provided at one end with the secondary input/output terminal pair (50) and connected to each other by the sixth, seventh, and eighth legs (51, 52, 53) arranged in parallel to each other,

wherein the power converter (6) further comprises:

> a primary upper relay wiring (45) connecting an end part of the primary coil (20a) on a positive polarity side to a position of the second leg (32) between the two primary switching elements (S5, S6);
> a primary lower relay wiring (46) connecting an end part of the primary coil (20a) on a negative polarity side to a position of the first leg (31) between the two primary switching elements (S3, S4);
> a secondary upper relay wiring (57) connecting an end part of the secondary coil (20b) on a positive polarity side to a position of the sixth leg (51) between the two secondary switching elements (S7, S8); and
> a secondary lower relay wiring (58) connecting an end part of the secondary coil (20b) on a negative polarity side to a position of the seventh leg (52) between the two secondary switching elements (S9, S10), and

wherein the LLC circuit (23) has a primary resonant capacitor (Cr) and a primary resonant inductor (Lr) arranged in series in the primary upper relay wiring (45).

8. The power converter (6) of claim 2, wherein the primary circuit (21) has:

> a first leg (31) and a second leg (32), each provided with two of the primary switching elements (S3, S4, S5, S6) arranged in series;
> a third leg (33) provided with two primary capacitors (C1, C2) arranged in series;
> a pair of primary main lines (36) provided at one end with the primary input/output terminal pair (30) and connected to each other by the first, second, and third legs (31, 32, 33) arranged in parallel to each other; and
> a coupling line (38) provided with two of the primary switching elements (S1, S2) arranged in series so that current flows towards each other, and connected to a position of the second leg (32) between the two primary switching elements (S5, S6) and a position of the third leg (33) between the two primary capacitors (C1, C2), wherein the secondary circuit (22) has:

> a sixth leg (51) and a seventh leg (52), each provided with two of the secondary switching elements (S7, S8, S9, S10) arranged in series;
> an eighth leg (53) provided with one secondary capacitor (C4); and
> a pair of secondary main lines (54) provided at one end with the secondary input/output terminal pair (50) and connected to each other by the sixth, seventh, and eighth legs (51, 52, 53) arranged in parallel to each other,

wherein the power converter (6) further comprises:

> a primary upper relay wiring (45) connecting an end part of the primary coil (20a) on a positive polarity side to a position of the second leg (32) between the two primary switching elements (S5, S6);
> a primary lower relay wiring (46) connecting an end part of the primary coil (20a) on a negative polarity side to a position of the first leg (31) between the two primary switching elements (S3, S4);
> a secondary upper relay wiring (57) connecting an end part of the secondary coil (20b) on a positive polarity side to a position of the sixth leg (51) between the two secondary switching elements (S7, S8); and
> a secondary lower relay wiring (58) connecting an end part of the secondary coil (20b) on a negative polarity side to a position of the seventh leg (52) between the two secondary switching elements (S9, S10), and
> wherein the LLC circuit (23) has a primary resonant capacitor (Cr) and a primary resonant inductor (Lr) arranged in series in the primary upper relay wiring (45)."

9. The power converter (6) of claim 7, wherein the bidirectional isolated LLC resonant circuit (15) further includes a secondary LLC circuit (60) located between the transformer (20) and the secondary circuit (22).

10. The power converter (6) of claim 8, wherein the bidirectional isolated LLC resonant circuit (15) further includes a secondary LLC circuit (60) located between the transformer (20) and the secondary circuit (22).

FIG. 1

FIG. 2

FIG. 3

CHARGING SWITCHING CONTROL INFORMATION

| I/O VTES MAGNITUDE RELATIONSHIP | CONTROL METHOD | S1 | S2 | S3 | S4 | S5 | S6 | S7 | S8 | S9 | S10 |
|---|---|---|---|---|---|---|---|---|---|---|---|
| $Vin < Vout$ | FULL-BRIDGE METHOD | PWM CONTROL | | | | | | PHASE SHIFT | | OFF | |
| $Vin/2 < Vout \leqq Vin$ | | | | | | | | | | | |
| $Vin/4 < Vout \leqq Vin/2$ | HALF-BRIDGE METHOD | | | OFF / ON | PHASE SHIFT | | | | | | |
| $0 < Vout \leqq Vin/4$ | INITIAL PHASE SHIFT METHOD | | | | | | | | | | |

FIG. 4A

DISCHARGING SWITCHING CONTROL INFORMATION

| I/O VTES MAGNITUDE RELATIONSHIP | CONTROL METHOD | S1 | S2 | S3 | S4 | S5 | S6 | S7 | S8 | S9 | S10 |
|---|---|---|---|---|---|---|---|---|---|---|---|
| $Vin = Vout$ | FULL-BRIDGE METHOD | OFF | | | | | | PWM CONTROL DUTY RATIO: FIXED 50% | | | |
| $Vin > Vout$ | INITIAL PHASE SHIFT METHOD | | | PHASE SHIFT | | | | | | | |

FIG. 4B

EP 4 568 087 A1

FIG. 5

FIG. 6

FIG. 7

(st1)

(st2)

(st3)

FIG. 8A

(st4)

(st5)

(st6)

FIG. 8B

15

# FIG. 9A

# FIG. 9B

15

FIG. 10

EP 4 568 087 A1

FIG. 11

29

(st1)

(st2)

FIG. 12A

FIG. 12B

FIG. 13

(SCENARIO 1)

FIG. 14A

(SCENARIO 2)

FIG. 14B

FIG. 15

FIG. 16

Europäisches
Patentamt
European
Patent Office
Office européen
des brevets

# EUROPEAN SEARCH REPORT

**Application Number**

EP 24 21 5883

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XUAN YANG ET AL: "A Novel Three-Level CLLC Resonant DC-DC Converter for Bidirectional EV Charger in DC Microgrids", IEEE TRANSACTIONS ON INDUSTRIAL ELECTRONICS, IEEE SERVICE CENTER, PISCATAWAY, NJ, USA, vol. 68, no. 3, 13 February 2020 (2020-02-13), pages 2334-2344, XP011821784, ISSN: 0278-0046, DOI: 10.1109/TIE.2020.2972446 [retrieved on 2020-11-25] * Chapter I; figures 1, 10 * * abstract * | 1-10 | INV. H02M1/00 H02M3/335 H02M7/483 B60L53/20 B60L55/00 H02J7/02 H02M7/487 H02M3/00 |
| X | RATANPURI GAUTAM ET AL: "A Novel Five-Level Hybrid Dual Active Bridge Converter with Optimized Switching Principle", 2022 IEEE APPLIED POWER ELECTRONICS CONFERENCE AND EXPOSITION (APEC), IEEE, 20 March 2022 (2022-03-20), pages 2092-2097, XP034124780, DOI: 10.1109/APEC43599.2022.9773682 [retrieved on 2022-05-19] * Chapter III; figure 1 * * abstract * | 1-10 | TECHNICAL FIELDS SEARCHED (IPC) H02M H02J B60L |

-/--

The present search report has been drawn up for all claims

| Place of search | Date of completion of the search | Examiner |
|---|---|---|
| The Hague | 18 March 2025 | Madouroglou, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt

European
Patent Office

Office européen
des brevets

**EUROPEAN SEARCH REPORT**

**Application Number**

EP 24 21 5883

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PATIL NIKHIL SURESH ET AL: "Peak Current Optimization of Hybrid NPC-DAB Converter Ensuring Soft Switching of All the Switches", 2023 IEEE ENERGY CONVERSION CONGRESS AND EXPOSITION (ECCE), IEEE, 29 October 2023 (2023-10-29), pages 3380-3385, XP034508523, DOI: 10.1109/ECCE53617.2023.10362163 [retrieved on 2023-12-29] * Chapter II; figure 1 * * abstract * | 1-10 | |
| X | CHAN Y P ET AL: "Realization of High-Efficiency Dual-Active-Bridge Converter With Reconfigurable Multilevel Modulation Scheme", IEEE JOURNAL OF EMERGING AND SELECTED TOPICS IN POWER ELECTRONICS, IEEE, PISCATAWAY, NJ, USA, vol. 8, no. 2, 29 June 2019 (2019-06-29), pages 1178-1192, XP011785927, ISSN: 2168-6777, DOI: 10.1109/JESTPE.2019.2926070 [retrieved on 2020-04-30] * figure 1 * * abstract * | 1-10 | TECHNICAL FIELDS SEARCHED (IPC) |

-/--

The present search report has been drawn up for all claims

| Place of search | Date of completion of the search | Examiner |
|---|---|---|
| The Hague | 18 March 2025 | Madouroglou, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 24 21 5883

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LI LITING ET AL: "Review of Dual-Active-Bridge Converters With Topological Modifications", IEEE TRANSACTIONS ON POWER ELECTRONICS, INSTITUTE OF ELECTRICAL AND ELECTRONICS ENGINEERS, USA, vol. 38, no. 7, 16 March 2023 (2023-03-16), pages 9046-9076, XP011940844, ISSN: 0885-8993, DOI: 10.1109/TPEL.2023.3258418 [retrieved on 2023-03-17] * the whole document * ----- | 1-10 | |
| | | | **TECHNICAL FIELDS SEARCHED (IPC)** |

The present search report has been drawn up for all claims

| Place of search | Date of completion of the search | Examiner |
|---|---|---|
| The Hague | 18 March 2025 | Madouroglou, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 3 of 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021035328 A